# EUROPEAN PATENT SPECIFICATION

(11) **EP 3 097 152 B1**
(45) Date of publication and mention of the grant of the patent: **26.04.2017**
(21) Application number: 15701482.0
(22) Date of filing: 08.01.2015
(51) Int. Cl.: C09B 69/10, C11D 3/37, C11D 3/42

(54) **DYE POLYMER**
FARBSTOFFPOLYMER
POLYMÈRE DE COLORANT

(30) Priority: 21.01.2014 EP 14151948
(43) Date of publication of application: 30.11.2016
(73) Proprietor: Unilever PLC, London, Greater London EC4Y 0DY (GB); Unilever N.V., 3013 AL Rotterdam (NL)
(72) Inventor: BATCHELOR, Stephen Norman, Wirral Merseyside CH63 3JW (GB); WOHLMUTH, Catharina Franziska, 67063 Ludwigshafen (DE)
(74) Representative: Brooijmans, Rob Josephina Wilhelmus
(86) International application number: PCT/EP2015/050239
(87) International publication number: WO 2015/110291

(56) References cited:
- EP-A2- 0 317 859
- WO-A1-2010/148624
- WO-A1-2011/047987
- WO-A1-2012/119859
- WO-A1-2012/126665
- WO-A1-2013/171211
- WO-A1-2013/171212
- US-A- 4 182 612
- US-A- 5 565 145

## Description

### FIELD OF INVENTION

The present invention concerns dye polymers and the use of the dye polymers in laundry compositions.

### BACKGROUND OF THE INVENTION

WO2011/047987 discloses a reactive dye covalently bound to polyethyleneimine polymers for used in laundry detergent formulations to whiten fabric.

WO2012/119859 discloses a dye polymer comprising a core polyamine of which from 60 to 100 mol % of the primary and secondary amines of the core polyamine are alkoxylated and from 0.1 to 30 mol % of the primary and secondary amines of the core polyamine are covalently bound to a reactive dye.

US5565145 discloses alkoxylated ethylene imine polymers without dyes present; the alkoxylated ethylene imine polymers are disclosed as soil dispersing agents.

There is a need to improve the deposition of reactive dyes covalently bound to polyethyleneimines to fabrics under domestic laundry conditions.

### SUMMARY OF THE INVENTION

We have found that the dye polymers of the present invention exhibit improved deposition to textiles.

In one aspect the present invention provides a dye polymer, most preferably a blue or violet dye polymer, comprising a polyethylene imine covalently bound to a reactive dye, the polyethylene imine having from 6 to 1000000, preferably 6 to 50 000, more preferably from 10 to 200, most preferably from 15 to 45, amine nitrogen atoms, wherein from 20 to 98 mol%, more preferably 57 to 95 mol%, most preferably 57 to 91 mol%, of the totality of the protons of the primary and secondary amine nitrogen atoms of the unsubstituted polyethylene imine are substituted by ethyl alcohol groups.

In another aspect the present invention provides a laundry composition comprising from 0.001 to 2.0 wt%, preferably 0.01 to 0.2 wt%, of the dye polymer and from 2 to 70 wt% of surfactant.

In a further aspect the present invention provides a domestic method of treating a laundry textile, the method comprising the steps of:
(i) treating a textile with an aqueous solution of the dye polymer as defined in any one of claims 1 to 10, the aqueous solution comprising from 10 ppb to 5000 ppm, preferably 100ppb to 2ppm, of the dye polymer; and, from 0.0 g/L to 6 g/L of a surfactant, preferably 0.2 to 4g/L ; and,
(ii) optionally rinsing and drying the textile.

In an even further aspect the present invention provides a dye polymer obtainable by reacting a polyethylene imine with ethylene oxide followed by reaction with a reactive dye.

In even further aspect the present invention provides a dye polymer obtainable by reacting a polyethylene imine with a reactive dye followed by reaction with ethylene oxide.

### DETAILED DESCRIPTION OF THE INVENTION

### Dye

The reactive dye is preferably blue or violet. Deposition of blue or violet dyes enhances the whiteness of white fabrics.

Many Reactive dyes are listed in the Colour Index (Society of Dyers and Colourists/American Association of Textile Chemists and Colorists). Reactive dyes are discussed in Industrial Dyes (edited by K. Hunger).

The reactive dye comprises a chromophore covalently linked to one or more reactive groups. The reactive group reacts with an NH or OH group, preferably an NH of the polymer to covalently bind the dye to the dye polymer. The amine is far more nucleophilic than the hydroxyl group and will preferentially react with the reactive dye. For example, for an NH₂ group as illustrated below:

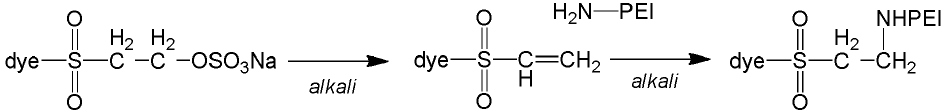

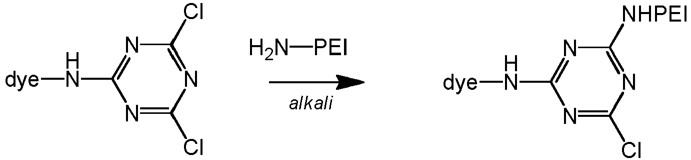

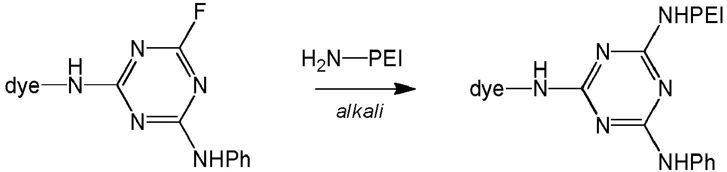

Chromophores may be selected from anthraquinone, phenazine, triphenodioxazine, mono-azo, bis-azo, polyazo, formazan and phthalocyanin.

The reactive group is preferably selected from heterocyclic reactive groups; 2-bromoprop-2-enamido; 2,3-dibromopropanamido; 2-chloro ethanamido; and, a sulfooxyethylsulfonyl reactive group (-SO₂CH₂CH₂OSO₃Na).

2-bromoprop-2-enamido reactive group has the structure:

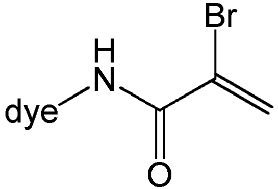

2,3-dibromopropanamido reactive group has the structure:

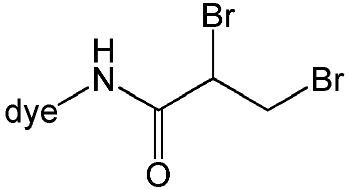

2-chloro ethanamido has the structure:

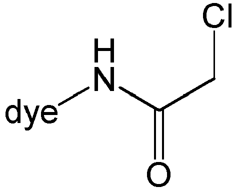

The heterocyclic reactive groups are preferably nitrogen containing aromatic rings bound to a halogen or an ammonium group, which react with NH₂ or NH groups of the polymers to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difluorotriazine, monochlorotriazinyl, and trichloropyrimidine.

The reactive group may be linked to the dye chromophore via an alkyl spacer for example: dye-NH-CH₂CH₂-reactive group.

Especially preferred heterocylic reactive groups are: 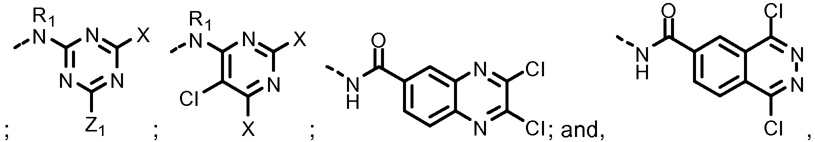 wherein R₁ is selected from H or alkyl, preferably H.

X is selected from F or Cl.

When X = Cl, Z₁ is selected from -Cl, -NR₂R₃, -OR₂, -SO₃Na

When X = F, Z₁ is selected from -NR₂R₃

R₂ and R₃ are independently selected from H, alkyl and aryl groups. Aryl groups are preferably phenyl and are preferably substituted by -SO₃Na or -SO₂CH₂CH₂OSO₃Na. Alkyl groups are preferably methyl or ethyl.

Preferred examples of reactive dyes are: 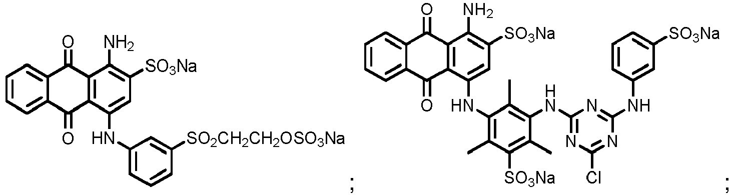 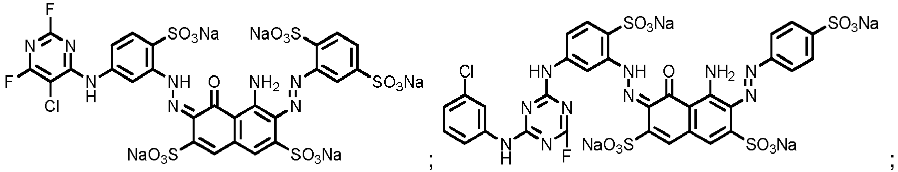 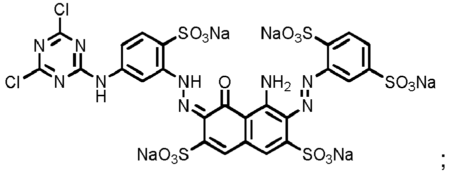 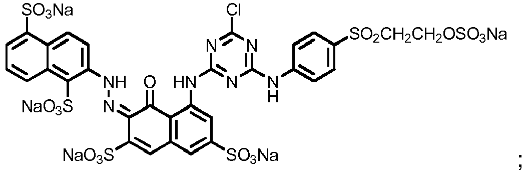 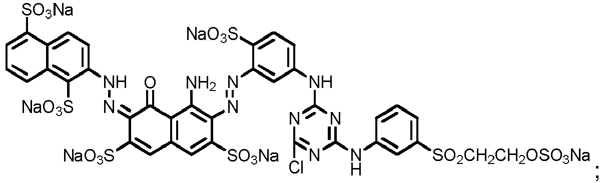 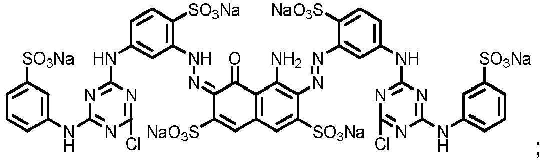 and,

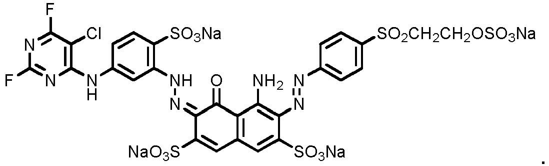

The reactive dye is preferably selected from mono-azo, bis-azo and anthraquinone dyes, most preferably anthraquinone dyes.

The reactive anthraquinone dye comprises an anthraquinone dye covalently linked to a reactive group. The reactive group reacts with an NH of the polymer to covalently bind the dye to the polymer.

A preferred anthraquinone dye is

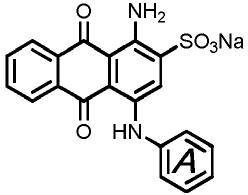

Where the A ring is substituted by a reactive group. preferably the A ring is substituted by a reactive group selected from: dichlorotriazinyl; difluorochloropyrimidine; monofluorotrazinyl; monofluorochlorotrazinyl; dichloroquinoxaline; difluorotriazine; monochlorotriazinyl; trichloropyrimidine 2-bromoprop-2-enamido; 2,3-dibromopropanamido; and, a sulfooxyethylsulfonyl reactive group (-SO₂CH₂CH₂OSO₃Na).

The A ring may be further substituted by organic groups preferably selected from alkyl and SO₃Na. The alkyl group is preferably C1-C8- alkyl, most preferably methyl.

Preferred reactive anthraquinone dyes are: Reactive blue 1; Reactive blue 2; Reactive blue 4; Reactive blue 5; Reactive blue 6; Reactive blue 12; Reactive blue 16; reactive blue 19; Reactive blue 24 ; Reactive blue 27; Reactive blue 29; Reactive blue 36; Reactive blue 44; Reactive blue 46 ; Reactive blue 47; reactive blue 49; Reactive blue 50; Reactive blue 53; Reactive blue 55; Reactive blue 61; Reactive blue 66; Reactive blue 68; Reactive blue 69; Reactive blue 74; Reactive blue 86; Reactive blue 93; Reactive blue 94; Reactive blue 101; Reactive blue103; Reactive blue114; Reactive blue117; Reactive blue125; Reactive blue141; Reactive blue142; Reactive blue 145; Reactive blue 149; Reactive blue 155; Reactive blue 164; Reactive blue 166; Reactive blue 177; Reactive blue 181; Reactive blue 185; Reactive blue 188; Reactive blue 189; Reactive blue 206; Reactive blue 208; Reactive blue 246; Reactive blue 247; Reactive blue 258; Reactive blue 261; Reactive blue 262; Reactive blue 263; Reactive blue 172; Reactive Violet 22; Reactive Violet 31; and, Reactive Violet 34.

The dyes are listed according to Colour Index (Society of Dyers and Colourists/American Association of Textile Chemists and Colorists) classification.

### Reactive Red dye

A Reactive Red dye may also be bound to the polymer preferably in a mol ratio of 1:100 to 1:4 with the anthraquinone reactive dye. This provides a more violet red shade to the polymer. The Reactive Red dye is preferably a mono-azo dye.

### PEI polymer

Polyethyleneimines (PEI) are formed by ring opening polymerisation of ethyleneimine.

PEI's are usually highly branched polyamines characterized by the empirical formula (C₂H₅N)ₙ with a molecular mass of 43.07 (as repeating units). They are commercially prepared by acid-catalyzed ring opening of ethyleneimine, also known as aziridine. (The latter, ethyleneimine, is prepared through the sulphuric acid esterification of ethanolamine).

All polyethylene imine (PEIs) of the present invention contain primary and secondary amines. Preferably tertiary amines are present in the PEI.

The Nitrogen of the dye-polymer may be further substituted by other groups, for example an alkyl group, or an alkyl sulphate group, or an alkyl aryl group or an alkyl aryl sulphate group.

### Dye-Polymer

The unsubstituted polyethylene imine is the polyethylene imine before reaction with the reactive dye or substitution to give ethyl alcohol groups. From an unsubstituted polyethylene imine a polyethylene imine substituted by ethyl alcohol groups is formed, this polyethylene imine substituted by ethyl alcohol groups is then reacted with a reactive dye. Alternatively, an unsubstituted polyethylene imine is reacted with a reactive dye which is subsequently substituted by ethyl alcohol groups.

Substitution by ethyl alcohol groups is preferably accomplished by the reaction of polymer with ethylene oxide, for example:

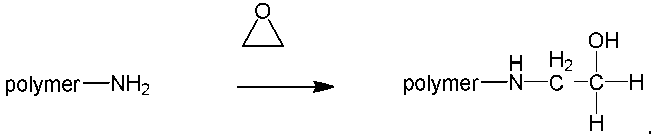

An example synthesis of the dye-polymer is shown below

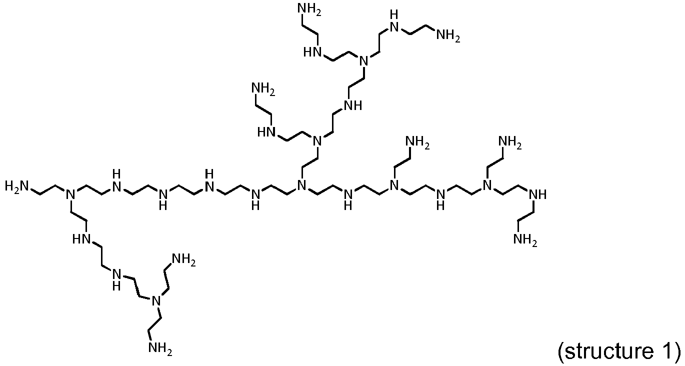

An unsubstituted PEI (structure 1) containing 29 nitrogen atoms of which 9 are primary (i.e. NH₂), 13 are secondary (i.e. NH) and 7 are tertiary, is reacted with 26 mol equivalents of ethylene oxide to give the structure below (structure 2).

The unsubstituted PEI (structure 1) contained (2x9) + (1x13) = 31 protons of the primary and secondary nitrogens. When reacted with 26 mol equivalents of ethylene oxide, 26/31 x 100 = 83.9 mol% of the protons of the primary and secondary nitrogens have been replaced by an ethyl alcohol groups (structure 2).

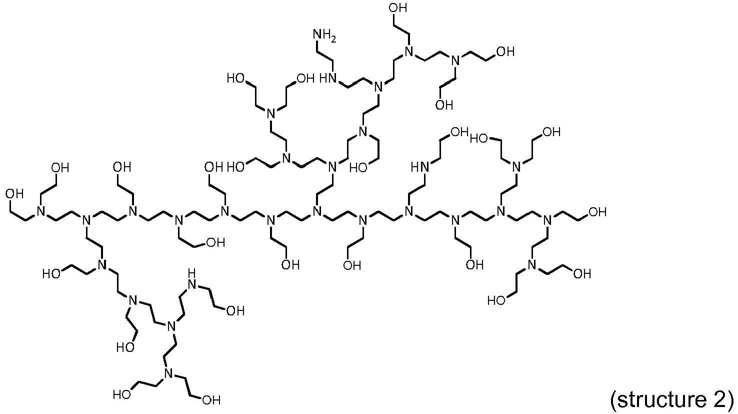

The ethyl alcohol substituted PEI (Structure 2) is then reacted with 1 mol equivalent of the dye Reactive Blue 49 to produce the dye-polymer (structure 3) of the invention.

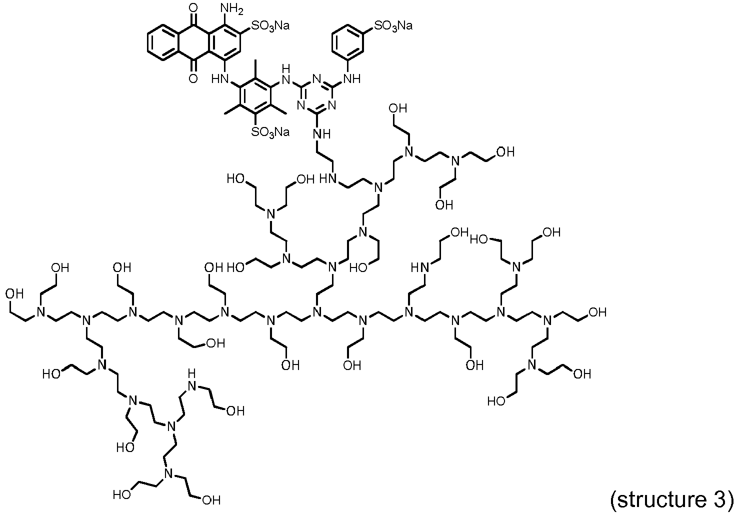

The reactive group of the reactive dye preferably reacts with an NH group of the ethyl alcohol substituted PEI.

Preferably the dye-polymer contains 1 to 30wt% of dye. In structure 3 the molecular weight of the dye polymer is 3214.0 of which 846.7 is the dye, the wt% of dye on the dye-polymer is 846.7/3214.0 x 100 = 26.34 wt%.

When the polyethylene imine has from from 10 to 200, most preferably from 15 to 45, amine nitrogen atoms, the mole ratio of reactive dye to polymer is from 0.2:1 to 1:1.

Reactive dyes with 2 reactive groups may cross-link the polymer, so that it is attached to 2 polymer chains. Preferably the reactive dye is only attached to one polymer.

### Surfactant

The laundry composition comprises from 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with ethylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO, preferably 7EO to 9EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl C₉ to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

### Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one C₁₂ to C₂₂ alkyl chain.

It is preferred if the quaternary ammonium compound has the following formula: 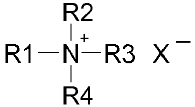 in which R¹ is a C₁₂ to C₂₂ alkyl or alkenyl chain; R², R³ and R⁴ are independently selected from C₁ to C₄ alkyl chains and X- is a compatible anion. A preferred compound of this type is the quaternary ammonium compound cetyl trimethyl quaternary ammonium bromide.

A second class of materials for use with the present invention are the quaternary ammonium of the above structure in which R¹ and R² are independently selected from C₁₂ to C₂₂ alkyl or alkenyl chain; R³ and R⁴ are independently selected from C₁ to C₄ alkyl chains and X⁻ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Procter and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

### Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is
typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

### Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

### Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

### Enzymes

One or more enzymes are preferred present in a laundry composition of the invention and when practicing a method of the invention.

Preferably the level of each enzyme in the laundry composition of the invention is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and lipoclean™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases A₁ and A₂ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Celluclean™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C*. *cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

### Enzyme Stabilizers

Any enzyme present in the composition may be stabilized using conventional stabilizing agents, e.g., a polyol such as ethylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and
WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Dye weights refer to the sodium or chloride salts unless otherwise stated.

Preferably the laundry treatment composition is in a plastic bag, plastic box or a cardboard box.
For ease of use it is preferred that the laundry treatment composition is present in 0.5 to 5kg packs.

The composition is preferably a liquid detergent. The liquid detergent may be contained within a unit dose, for example 20ml of liquid contained within a polyvinyl alcohol film. Within liquid detergents the dye-polymers have the additional advantage of showing low staining to fabric on neat contact of the liquid with fabric. Preferably the pH of the composition when dissolved in water at 2g/L is in the range 7 to 9.

Domestic wash conditions include, hand washing clothes in water at temperatures of 278 to 335K, preferably 283K to 305K and machine washing in front loading or top loading washing machine at water temperatures of from 278 to 368, preferably 283 to 335K.

### Examples

### Example 1

The following liquid composition was made.

| | Weight% |
|---|---|
| Linear alkyl benzene sulfonic acid | 8.5 |
| Alcohol ethoxylate (C12-C15 primary alcohol with 7 moles of ethoxylate (EO)) | 12.7 |
| Sodium lauryl ether sulphate(3EO) | 4.3 |
| 1,2-propanediol | 20 |
| N,N-Dimethyl-N-dodecylglycine betaine | 1.5 |
| triethylamine | 3.5 |
| Perfume | 2.4 |
| NaOH | To pH=6.5 |
| Water | remainder |

The compositions were used to wash a mixture of white fabrics: woven cotton, micro-fibre polyester, and knitted nylon-elastane at a Liquor to cloth ratio of 10:1 in a linitest at room temperature. The fabrics were of equal area. 26° French hard water was used and each wash lasted 30 minutes and was followed by a running rinse. The compositions were all used at 1.4g/L. The polymers of example 1 were added to the wash liquor to provide a concentration of 10 ppm in the wash. The white cloths were washed three times.
The dye-polymers tested and the results are summarised in the table below. The PEI was ethoxylated then dyed.

| dye | PEI M_{w} | Moles dye | Moles EO | Δb polyester |
|---|---|---|---|---|
| Reactive Blue 171 reference | 1300 | 0.2 | 0 | 0.6 |
| Reactive Blue 171 | 1300 | 0.2 | 10.1 | 1.1 |
| Reactive Blue 171 | 1300 | 0.2 | 20.3 | 1.4 |
| Reactive Blue 269 reference | 1300 | 0.2 | 0 | 2.8 |
| Reactive Blue 269 | 1300 | 0.2 | 20.3 | 4.4 |
| Reactive Blue 49 reference | 1300 | 0.2 | 0 | 1.1 |
| Reactive Blue 49 | 1300 | 0.2 | 20.3 | 1.9 |

Reactive Blue 171 is a bis-azo dye; Reactive Blue 269 is a triphenodioxazine dye; Reactive Blue 49 is an anthraquinone dye.

For all dyes the presence of ethyl alcohol groups increases the deposition to the fabric as shown by the increase in the Δb value.

## Claims

1. A dye polymer comprising a polyethylene imine covalently bound to a reactive dye, the polyethylene imine having from 6 to 1000000 amine nitrogen atoms, wherein from 20 to 98 mol% of the totality of the protons of the primary and secondary amine nitrogen atoms of the unsubstituted polyethylene imine are substituted by ethyl alcohol groups.

2. A dye polymer according to claim 1, wherein the dye polymer is a blue or violet dye polymer.

3. A dye polymer according to claim 1 or 2, wherein the polyethylene imine contains from 15 to 45 amine nitrogen atoms.

4. A dye polymer according to any one of the preceding claims, wherein 57 to 80 mol% of the protons of the primary and secondary amine nitrogen atoms are substituted by ethyl alcohol groups.

5. A dye polymer according to any one of the preceding claims, wherein the reactive group of the reactive dye is selected from heterocyclic reactive groups; 2-bromoprop-2-enamido; 2,3-dibromopropanamido; 2-chloro ethanamido; and, a sulfooxyethylsulfonyl reactive group (-SO₂CH₂CH₂OSO₃Na).

6. A dye polymer according to any one of the preceding claims, wherein the chromphore of the reactive dye is selected from; mono-azo; bis-azo; and, anthraquinone.

7. A dye polymer according to claims 6, wherein the chromphore of the reactive dye is anthraquinone.

8. A dye polymer according to claim 7, wherein the reactive dye is an anthraquinone dye of the form: 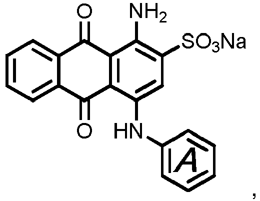 wherein the A ring is substituted by a reactive group selected from: dichlorotriazinyl; difluorochloropyrimidine; monofluorotrazinyl; monofluorochlorotrazinyl; dichloroquinoxaline; difluorotriazine; monochlorotriazinyl; trichloropyrimidine 2-bromoprop-2-enamido; 2,3-dibromopropanamido; and, a sulfooxyethylsulfonyl reactive group (-SO₂CH₂CH₂OSO₃Na).

9. A dye polymer according to claim 8, wherein the A ring is substituted by one or more organic groups selected from: C1-C8-alkyl; and, SO₃Na.

10. A dye polymer according to claim 1, wherein the anthraquinone dye is selected from: Reactive blue 1; Reactive blue 2; Reactive blue 4; reactive blue 5; Reactive blue 6; Reactive blue 12; Reactive blue 16; reactive blue 19; Reactive blue 24 ; Reactive blue 27; Reactive blue 29; Reactive blue 36; Reactive blue 44; Reactive blue 46 ; Reactive blue 47; reactive blue 49; Reactive blue 50; Reactive blue 53; Reactive blue 55; Reactive blue 61; Reactive blue 66; Reactive blue 68; Reactive blue 69; Reactive blue 74; Reactive blue 86; Reactive blue 93; Reactive blue 94; Reactive blue101; Reactive blue103; Reactive blue114; Reactive blue117; Reactive blue125; Reactive blue141; Reactive blue142; Reactive blue 145; Reactive blue 149; Reactive blue 155; Reactive blue 164; Reactive blue 166; Reactive blue 177; Reactive blue 181; Reactive blue 185; Reactive blue 188; Reactive blue 189; Reactive blue 206; Reactive blue 208; Reactive blue 246; Reactive blue 247; Reactive blue 258; Reactive blue 261 Reactive blue 262; Reactive blue 263; Reactive blue 172; Reactive Violet 22; Reactive Violet 31; and, Reactive Violet 34.

11. A laundry composition comprising from 0.001 to 2.0 wt% of the dye polymer as defined any one of the preceding claims and from 2 to 70 wt% of surfactant.

12. A domestic method of treating a textile, the method comprising the steps of:
(i) treating a textile with an aqueous solution of the dye polymer as defined in any one of claims 1 to 10, the aqueous solution comprising from 10 ppb to 5000 ppm of the dye polymer; and, from 0.0 g/L to 6 g/L of a surfactant; and,
(ii) optionally rinsing and drying the textile.

13. A domestic method of treating a textile according to claim 12, wherein the aqueous solution comprises from 0.2 to 4 g/L of a surfactant.

14. A domestic method of treating a textile according to claim 12 or 13, wherein the aqueous solution comprises a fluorescer in the range from 0.0001 g/l to 0.1 g/l

## Patentansprüche

1. Farbstoffpolymer, das ein an einen Reaktivfarbstoff kovalent gebundenes Polyethylenimin umfasst, wobei das Polyethylenimin 6 bis 1000000 Aminstickstoffatome aufweist, wobei 20 bis 98 Mol-% der Gesamtheit der Protonen der primären und sekundären Aminstickstoffatome des unsubstituierten Polyethylenimins durch Ethylalkoholgruppen substituiert sind.

2. Farbstoffpolymer nach Anspruch 1, wobei das Farbstoffpolymer ein blaues oder violettes Farbstoffpolymer ist.

3. Farbstoffpolymer nach Anspruch 1 oder 2, wobei das Polyethylenimin 15 bis 45 Aminstickstoffatome enthält.

4. Farbstoffpolymer nach irgendeinem der vorhergehenden Ansprüche, wobei 57 bis 80 Mol-% der Protonen der primären und sekundären Aminstickstoffatome durch Ethylalkoholgruppen substituiert sind.

5. Farbstoffpolymer nach irgendeinem der vorhergehenden Ansprüche, wobei die reaktive Gruppe des Reaktivfarbstoffs unter den heterocyclischen reaktiven Gruppen der 2-Bromprop-2-enamido-, 2,3-Dibrompropanamido-, 2-Chlorethanamido- und einer Sulfooxyethylsulfonyl-Reaktivgruppe (-SO₂CH₂CH₂OSO₃Na) ausgewählt ist.

6. Farbstoffpolymer nach irgendeinem der vorhergehenden Ansprüche, wobei der Chromophor des Reaktivfarbstoffs unter Mono-azo, Bis-azo und Anthrachinon ausgewählt ist.

7. Farbstoffpolymer nach Anspruch 6, wobei der Chromophor des Reaktivfarbstoffs Anthrachinon ist.

8. Farbstoffpolymer nach Anspruch 7, wobei der Reaktivfarbstoff ein Anthrachinonfarbstoff der Formel 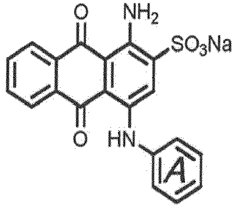 ist,
wobei der Ring A durch eine reaktive Gruppe substituiert ist, die ausgewählt ist unter Dichlortriazinyl, Difluorchlorpyrimidin, Monofluortrazinyl, Monofluorchlortrazinyl, Dichlorchinoxalin, Difluortriazin, Monochlortriazinyl, Trichlorpyrimidin-2-bromprop-2-enamido, 2,3-Dibrompropanamido- und einer Sulfooxyethylsulfonyl-Reaktivgruppe (-SO₂CH₂CH₂OSO₃Na).

9. Farbstoffpolymer nach Anspruch 8, wobei der Ring A durch eine oder mehrere organische Gruppen, ausgewählt unter C1-C8-Alkyl und SO₃Na, substituiert ist.

10. Farbstoffpolymer nach Anspruch 1, wobei der Anthrachinonfarbstoff ausgewählt ist unter: Reactive Blue 1, Reactive Blue 2, Reactive Blue 4, Reactive Blue 5, Reactive Blue 6, Reactive Blue 12, Reactive Blue 16, Reactive Blue 19, Reactive Blue 24, Reactive Blue 27, Reactive Blue 29, Reactive Blue 36, Reactive Blue 44, Reactive Blue 46, Reactive Blue 47, Reactive Blue 49, Reactive Blue 50, Reactive Blue 53, Reactive Blue 55, Reactive Blue 61, Reactive Blue 66, Reactive Blue 68, Reactive Blue 69, Reactive Blue 74, Reactive Blue 86, Reactive Blue 93, Reactive Blue 94, Reactive Blue 101, Reactive Blue 103, Reactive Blue 114, Reactive Blue 117, Reactive Blue 125, Reactive Blue 141, Reactive Blue 142, Reactive Blue 145, Reactive Blue 149, Reactive Blue 155, Reactive Blue 164, Reactive Blue 166, Reactive Blue 177, Reactive Blue 181, Reactive Blue 185, Reactive Blue 188, Reactive Blue 189, Reactive Blue 206, Reactive Blue 208, Reactive Blue 246, Reactive Blue 247, Reactive Blue 258, Reactive Blue 261, Reactive Blue 262, Reactive Blue 263, Reactive Blue 172, Reactive Violet 22, Reactive Violet 31, und Reactive Violet 34.

11. Waschmittelzusammensetzung, umfassend von 0,001 bis 2,0 Gew.-% Farbstoffpolymer, wie in irgendeinem der vorhergehenden Ansprüche definiert, und von 2 bis 70 Gew.-% Tensid.

12. Häusliches Verfahren zur Behandlung eines Textils, wobei das Verfahren die Schritte umfasst:
(i) Behandlung eines Textils mit einer wässrigen Lösung des Farbstoffpolymers, wie in irgendeinem der Ansprüche 1 bis 10 definiert, wobei die wässrige Lösung von 10 ppb bis 5000 ppm des Farbstoffpolymers und von 0,0 g/l bis 6 g/l eines Tensids umfasst und
(ii) gegebenenfalls optionales Spülen und Trocknen des Textils.

13. Häusliches Verfahren zur Behandlung eines Textils nach Anspruch 12, wobei die wässrige Lösung von 0,2 bis 4 g/l eines Tensids umfasst.

14. Häusliches Verfahren zur Behandlung eines Textils nach Anspruch 12 oder 13, wobei die wässrige Lösung ein fluoreszierendes Mittel in dem Bereich von 0,0001 g/l bis 0,1 g/l umfasst.

## Revendications

1. Polymère de colorant comprenant une polyéthylène imine liée de manière covalente à un colorant réactif, la polyéthylène imine ayant de 6 à 1 000 000 d'atomes d'azote d'amine, dans lequel de 20 à 98 % en mole de la totalité des protons des atomes d'azote d'amine primaire et secondaire de la polyéthylène imine non substituée sont substitués par des groupes alcool éthylique.

2. Polymère de colorant selon la revendication 1, dans lequel le polymère de colorant est un polymère de colorant bleu ou violet.

3. Polymère de colorant selon la revendication 1 ou 2, dans lequel la polyéthylène imine contient de 15 à 45 atomes d'azote d'amine.

4. Polymère de colorant selon l'une quelconque des revendications précédentes, dans lequel de 57 à 80 % en mole des protons des atomes d'azote d'amine primaire et secondaire sont substitués par des groupes alcool éthylique.

5. Polymère de colorant selon l'une quelconque des revendications précédentes, dans lequel le groupe réactif du colorant réactif est choisi parmi des groupes réactifs hétérocycliques ; 2-bromoprop-2-enamido ; 2,3-dibromopropanamido ; 2-chloroéthanamido ; et, un groupe réactif sulfooxyéthylsulfonyle (-SO₂CH₂CH₂OS₃Na).

6. Polymère de colorant selon l'une quelconque des revendications précédentes, dans lequel le chromophore du colorant réactif est choisi parmi ; mono-azo ; bis-azo ; et, anthraquinone.

7. Polymère de colorant selon la revendication 6, dans lequel le chromophore du colorant réactif est l'anthraquinone.

8. Polymère de colorant selon la revendication 7, dans lequel le colorant réactif est un colorant d'anthraquinone de la forme : 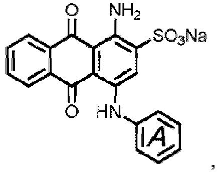 dans lequel le noyau A est substitué par un groupe réactif choisi parmi : dichlorotriazinyle ; difluorochloropyrimidine ; monofluorotrazinyle ; monofluorochlorotrazinyle ; dichloroquinoxaline ; difluorotriazine ; monochlorotriazinyle ; trichloropyrimidine 2-bromoprop-2-énamido ; 2,3-dibromopropanamido ; et, un groupe réactif sulfooxyéthylsulfonyle (-SO₂CH₂CH₂OSO₃Na).

9. Polymère de colorant selon la revendication 8, dans lequel le noyau A est substitué par un ou plusieurs groupes organiques choisis parmi : un groupe alkyle en C1-C8 ; et, SO₃Na.

10. Polymère de colorant selon la revendication 1, dans lequel le colorant d'anthraquinone est choisi parmi : bleu réactif 1 ; bleu réactif 2 ; bleu réactif 4 ; bleu réactif 5 ; bleu réactif 6 ; bleu réactif 12 ; bleu Réactif 16 ; bleu réactif 19 ; bleu réactif 24 ; bleu réactif 27 ; bleu réactif 29 ; bleu réactif 36 ; bleu réactif 44 ; bleu réactif 46 ; bleu réactif 47 ; bleu réactif 49 ; bleu réactif 50 ; bleu réactif 53 ; bleu réactif 55 ; bleu réactif 61 ; bleu réactif 66 ; bleu réactif 68 ; bleu réactif 69 ; bleu réactif 74 ; bleu réactif 86 ; bleu réactif 93 ; bleu réactif 94 ; bleu réactif 101 ; bleu réactif 103 ; bleu réactif 114 ; bleu réactif 117 ; bleu réactif 125 ; bleu réactif 141 ; bleu réactif 142 ; bleu réactif 145 ; bleu réactif 149 ; bleu réactif 155 ; bleu réactif 164 ; bleu réactif 166 ; bleu réactif 177 ; bleu réactif 181 ; bleu réactif 185 ; bleu réactif 188 ; bleu réactif 189 ; bleu réactif 206 ; bleu réactif 208 ; bleu réactif 246 ; bleu réactif 247 ; bleu réactif 258 ; bleu réactif 261 ; bleu réactif 262 ; bleu réactif 263 ; bleu réactif 172 ; violet réactif 22 ; violet réactif 31 ; et, violet réactif 34.

11. Composition de lessive comprenant de 0,001 à 2,0 % en masse du polymère de colorant selon l'une quelconque des revendications précédentes et de 2 à 70 % en masse de tensio-actif.

12. Procédé domestique de traitement d'un textile, le procédé comprenant les étapes de :
(i) traitement d'un textile avec une solution aqueuse du polymère de colorant selon l'une quelconque des revendications 1 à 10, la solution aqueuse comprenant de 10 ppb à 5000 ppm du polymère de colorant ; et, de 0,0 g/L à 6 g/L d'un tensio-actif ; et,
(ii) éventuellement rinçage et séchage du textile.

13. Procédé domestique de traitement d'un textile selon la revendication 12, dans lequel la solution aqueuse comprend de 0,2 à 4 g/L d'un tensio-actif.

14. Procédé domestique de traitement d'un textile selon la revendication 12 ou 13, dans lequel la solution aqueuse comprend un agent fluorescent dans l'intervalle de 0,0001 g/l à 0,1 g/l.
